# EUROPEAN PATENT APPLICATION

(11) **EP 4 699 500 A1**
(43) Date of publication of application: **25.02.2026**
(21) Application number: 24195863.6
(22) Date of filing: 22.08.2024
(51) Int. Cl.: A47J 43/00, G01K 1/14

(54) **SENSOR PROBE FOR MEASURING A FOOD PROCESSING PARAMETER**

(71) Applicant: ELECTROLUX APPLIANCES AKTIEBOLAG, 105 45 Stockholm (SE)
(72) Inventor: HOFFMANN, Harald, 91541 Rothenburg ob der Tauber (DE); BERNHARD, Christoph, 91541 Rothenburg ob der Tauber (DE); SKORNOWICZ, Jan, 91541 Rothenburg ob der Tauber (DE); HÜTHER, Henrike, 91541 Rothenburg ob der Tauber (DE)
(74) Representative: Electrolux Group Patents

(57) **Abstract**

The invention provides a sensor probe (2) for measuring a food processing parameter, comprising: a housing (4, 5), a sensor element (10) arranged at the housing (4, 5) or extending from the housing (4, 5) and being configured to detect a food parameter, a control unit (12) configured to receive a sensor signal from the sensor element (10), and a movement sensor (14) configured to detect a movement and/or position of the sensor probe (2), wherein the control unit (12) is further configured to receive and process a movement signal (60) from the movement sensor (14).

## Description

The present invention relates to a sensor probe for measuring a food processing parameter, a docking arrangement comprising such sensor probe, and a food processing arrangement comprising such sensor probe and a food processing device having a device controller.

EP 3 431 943 A1 discloses a sensor probe for measuring a food preparation parameter, wherein the sensor probe comprises a handle portion, a sensor portion, and a stepped connecting portion connecting the handle portion and the sensor portion, such that the handle portion is offset with respect to the sensor portion.

It is an object of the invention to provide an improved sensor probe, and in particular a docking arrangement and a food processing arrangement with such improved sensor.

The invention is defined in the independent claims, respectively. Particular embodiments are set out in the dependent claims.

According to claim 1, a sensor probe for measuring a food processing parameter is provided. The sensor probe comprises: a housing, a sensor element arranged at the housing or extending from the housing and being configured to detect a food parameter, a control unit configured to receive a sensor signal from the sensor element, and a movement sensor configured to detect a movement and/or position of the sensor probe. The control unit is further configured to receive and process a movement signal from the movement sensor.

Preferably, the control unit comprises a movement analysis module configured to process or preprocess the movement signal to change/adapt or control functions of the sensor probe and/or of an external receiver such as a food processing device (e.g. a cooktop or oven) or a mobile device (e.g. mobile phone or tablet).

Thus, the sensor probe provides an additional signal for an advanced control, and in particular for an advanced control of the sensor probe and/or the food processing device and/or the mobile device.

The sensor probe may be communicatively connected to the food processing device and/or the mobile device. The control unit may be configured to transmit control signals to a receiver module of the food processing device which is configured to control the operation of the food processing device based on the transmitted control signal.

Alternatively, an alarm or push notice indicating the sensor probe is dropping down can be transmitted to the mobile device of the user. In this case, the mobile device and the sensor probe are preferably communicating via electromagnetic waves (e.g. WIFI^{®}, WLAN^{®}, Bluetooth^{®}) and/or a cloud. For example, the push notice or alarm can be transmitted via an app to the mobile device of the user.

The movement sensor makes it possible to detect movements of the sensor probe and the control unit is configured to control and/or activate and/or deactivate various functions of the sensor probe or the food processing device based on the detected movement signal. The movement sensor in connection with the control unit eliminates the need for physical switches (buttons) or electronic contact switches which are difficult to seal against water and steam in a rough or hot or humid environment in which the sensor probe or its sensor element is used and which can create mal function due to unintended switch or steam. The sensor probe may be designed watertight, and in particular dishwasher safe. Thus, the cleaning of the sensor probe is simplified.

Preferably, the sensor probe is implemented without any buttons and the control of the sensor probe is only achieved by detecting and processing the movement signal from the movement sensor. The sensor probe can also be operated with wet fingers, as the sensor probe is controlled by detecting the movement of the movement sensor and not by pressing or touching buttons. Thus, the sensor probe can be operated easily and reliably.

The movement sensor is for example an acceleration sensor adapted to sense an acceleration. By sensing an acceleration it can be detected that a change in movement of the sensor probe took/takes place. A tipping of the sensor probe and associated therewith the vibration of the movement sensor results in sensing of a vibration which indicates a small movement in form of a vibration of the sensor probe and in particular of the movement sensor. In particular, the acceleration signal can be processed or filtered and a type of movement can be determined. For example, it can be differentiated between a tipping on the sensor probe, a shaking of the sensor probe, vibrations of boiling noise, or a dropping down of the sensor probe.

The movement sensor may also be implemented by a position sensor which determines the absolute or relative position of the sensor probe (here position of the movement sensor) and by changing the position of the sensor probe a movement thereof can be detected. A position detector may be a GPS sensor (e.g. absolute position) or an ultrasonic detector (e.g. relative position/distance). The ultrasonic detector is preferably configured to detect a position/distance of the movement sensor relative to another object in the ambient of the sensor probe.

The sensor probe and in particular the housing may comprise a mounting element which is configured such that the sensor probe can be positioned at a rim of a pot or at a side wall of the pot. The sensor probe may also be positioned within the food such as a steak by pushing the sensor element into the food (in this case, the sensor probe is maintained in its position only by the connection between food and sensor element).

Preferably, the movement sensor and/or the control unit are arranged within the housing. The housing may comprise a handle portion configured for holding the sensor probe, and a connecting portion connecting the handle portion and the sensor element.

Preferably, the movement sensor and/or the control unit are arranged within the handle portion. The sensor probe may comprise a battery for power supply of the sensor probe. The battery may be a rechargeable battery. Preferably the battery is arranged within the handle portion.

The sensor element may be formed as an elongate element having a pointed tip. This facilitates insertion of the sensor element into a food piece. The sensor probe may have an overall length between 15 and 30 cm, preferably between 17 and 25 cm.

Preferably the connecting portion is designed as a stepped connecting portion such that at least a portion of the handle portion is offset with respect to the sensor element. The handle portion and the sensor element may be arranged at an angle to each other. For example, the handle portion and the sensor element enclose an angle of 20 to 60°, 25 to 55° or 30 to 50° between them. Alternatively, the handle portion may be arranged parallel to the longitudinal axis of the sensor element.

Preferably, the movement sensor comprises an accelerometer configured to sense an acceleration in one, two or three spatial directions. The accelerometer may be a gyroscopic sensor and/or a micro-electro-mechanical system (MEMS) device. This allows to sense, detect (and analyze) a large number of different movements to be detected with the movement sensor. This makes it possible to control an even larger number of different functions with the sensor probe. For example, different functions of the sensor probe or an external receiver such as the food processing device (or a mobile device, e.g. an app on the mobile device) can be controlled depending on the direction of movement of the sensor probe and in particular of the movement sensor.

Preferably, the control unit comprises a movement analysis module configured to process the movement signal to determine that the movement signal is indicative for one or more of the following:
- that the movement event is a tipping signal indicating a tipping of the sensor probe,
- that the movement event is shock-free movement,
- that the movement includes a shock vibration and/or exceeds a predefined threshold of acceleration,
- that the movement is an ongoing and/or a regular movement,
- that the movement is a predefined movement pattern, for example indicating a shaking of the sensor probe, and the control unit is configured to activate a setting mode when detecting the predefined movement pattern,
- that the movement is a noisy and/or stochastic pattern.

Detection of a tipping may be used for 'switching' operations or for functions of the sensor probe or the food processing device communicating with the sensor probe. This tipping/switching function provided by the movement sensor in connection with the control unit eliminates the need for physical switches (buttons) or electronic contact switches which are difficult to seal against water and steam in a rough/hot/humid environment in which the sensor probe or its sensor element is used.

Preferably the shock-free movement is a slow and/or soft movement. The shock-free movement may be indicative of a repositioning of the sensor probe and/or food to be processed by the user. For example, during the cooking process the sensor probe may need to be removed e.g. when turning the steak or stirring the food and then need to be put back. When detecting a shock-free movement of the sensor probe, the temperature curve of the sensor probe may be ignored and a message may be sent to the user (e.g. via the food processing device or the mobile device of the user) to put back the sensor probe. If the sensor probe is not put back, the user may be informed to place the sensor probe back into the pot/food or otherwise the cooking process will be stopped. The movement sensor may track if the sensor probe is put back into the pot/food.

If the movement of the sensor probe indicates a shock vibration and/or exceeds a predefined acceleration threshold, it may be indicative for example of a dropping down of the sensor probe or a sudden repositioning which normally is an unintended movement and may result in deactivating or interrupting the food processing process. In particular, during the cooking process, it could happen that the sensor probe can fall out of a pot and a risk of overheating the food or burning fat can happen. Thus, the user can immediately react and put back the sensor probe into the cookware and/or food. Alternatively or additionally, an alarm may be sent via the food processing device communicating with the sensor probe or an alarm may be sent to a mobile device of the user which communicates with the sensor probe.

When the movement of the sensor probe indicates a noisy and/or stochastic pattern it can for example be detected that a liquid for processing the food or liquid food (such as a stew or soup) is boiling and/or that bubbles are forming in the liquid or liquid food (e.g. there is the risk of overflow when bubbles form in milk or the tomato soup is bubbling and spilling over). For example, if boiling of the liquid or water is detected and the food should only be processed below the boiling temperature, the control unit may transmit a control signal to the food processing device, and a device controller of the food processing device is configured to reduce the heating power based on the control signal of the sensor probe. For example this function may be used for keeping sausages in a warm state or to prevent the food from burning.

The movement analysis module or a portion of the analysis module may be integrated in the movement sensor.

Preferably, the control unit is configured to detect the numbers of tipping and/or the repetition frequency of tipping and in dependency thereof the control unit is configured to activate or deactivate the food processing parameter measuring mode and/or control a signal transmission mode and/or to enter a setting mode of the control unit in which the control unit is configured for receiving setting signals.

For example, when tipping the sensor probe one time, the operation of the control unit changes from a standby mode to an active mode and/or an indicator of the sensor probe, such as an LED, may be activated. For example, when tipping the sensor probe two times, the operation of the control unit changes from an active mode to a standby mode or off mode and/or an indicator of the sensor probe, such as an LED, may be deactivated.

Preferably, the ongoing and/or regular movement is a periodic signal or comprises components of a periodic signal indicating that food processing is in progress and optionally the movement analysis module detects the strength of the periodic movement signal.

The movement analysis module may be adapted to supply an intermediate signal to the control unit (in particular to a controller of the control unit), wherein the intermediate signal indicates the presence and/or strength of a or the periodic signal.

The periodic signal may be indicative that a food processing device is applying food processing power (or heating power) to the food to be processed. If for example the food processing device is an induction apparatus configured to apply induction radiation to a vessel or container or pot in which the food is contained, by detecting the presence or absence of the periodic vibration signal (caused by the induction radiation) it can be determined whether the food to which the sensor probe is assigned is actually heated or not. Incorrect food processing can be detected thereby. E.g. it can be detected if the vessel or container is positioned at the wrong heating zone or if the vessel is not convenient for induction heating or if there is a failure in the induction heating.

Detection of the periodic signal is much faster than detecting a temperature change of the processed food. Thus, operation control whether e.g. the food to be processed is placed on or in the correct processing zone is much faster than a verification using a temperature change.

Preferably, the control unit comprises a or the movement analysis module, wherein the movement analysis module is configured to:
- analyze a temporal sequence of the movement signal generated by the movement sensor and to determine a type of movement dependent on the temporal sequence, and/or
- apply a signal pattern analysis to the movement signal generated by the movement sensor to determine a type of movement, and/or
- compare the movement signal generated by the movement sensor to a signal threshold, and/or
- detect a periodic signal in the movement signal.

For comparing the movement signal to a signal threshold, the movement analysis module is preferably configured to form a signal average of the movement signal.

Preferably for analyzing a temporal sequence of the movement signal is analyzed for a predefined time period.

Preferably, the movement analysis module is configured to generate an intermediate signal which is supplied to the control unit (or the controller of the control unit). The control unit (or the controller of the control unit) may be configured to control an operation mode of the sensor probe in dependency of the intermediate signal, and/or to transmit control signals to an external unit in dependency of the intermediate signal. Thus, the intermediate control signal can be used for controlling a function of the sensor probe and/or a function of the external unit such as the food processing device and/or a mobile device.

Preferably the control unit changes its operation mode dependent on the intermediate signal from the movement analysis module. For example an indicator of the sensor probe is activated and/or the operation of the control unit changes from a standby mode to an active mode. In the active mode the sensor signal from the sensor element is detected and processed and/or the sensor element is activated. For example, when the user grabs the sensor probe, a movement of the sensor probe is detected by the movement sensor which leads to a change from the standby mode to the active mode of the sensor probe.

Preferably, the control unit comprises a transmission module configured to transmit control signals to an external receiver (for example of the food processing device or the mobile device), wherein in particular the control signals are indicative for the food processing parameter and/or for the movement signal generated by the movement sensor and/or for a status signal indicative for the movement type.

The transmission module may be a wireless transmission module such as a Bluetooth transmission module configured to transmit Bluetooth signals to a Bluetooth receiver (and transmitter). Alternatively the transmission module may be radio signal transmitter, a RFID signal transmitter or an ultrasonic sound transmitter. Alternatively, the transmission module may transmit a signal by generating Surface Acoustic Waves (SAW) that are detected by the external receiver.

Preferably the movement analysis module is configured to implement a curve analysis to the movement signal and/or to apply a Fourier Transform analysis to the movement signal, in particular for determining the type of movement.

In an exemplary implementation, the control unit does not comprise the transmission module (i.e. the control unit is not configured to transmit any signals to the external receiver). In this case, the movement analysis module may determine a specific type of movement of the sensor probe based on the sensed movement signal and based on the type of movement, the control unit is configured to control a function of the sensor probe. In particular, the movement analysis module may determine a dropping of the sensor probe and the control unit may send an acoustic signal such as a beep to a loudspeaker of the sensor probe. The acoustic signal gives the user an indication that the sensor probe does not work as desired.

Preferably, the control unit comprises a or the transmission module configured to transmit control signals to the external receiver (for example of the food processing device or the mobile device). The sensor probe may further comprise an electrical or optical wire connected between the transmission module and the external receiver for transmitting the control signals, and/or preferably the transmission module is configured to transmit the control signals wirelessly to the external receiver.

Preferably, the electrical or optical wire is heat resistant. More preferably the entire sensor probe is heat resistant. For example the sensor probe is heat resistant up to a temperature of 400°, 350°, 300°. The housing of the sensor probe may be made of a heat resistant plastic. The sensor probe may be selectively positioned on a pot positioned on a cooktop or within an oven. This makes the application of the sensor probe more versatile for the user.

The wireless transmission may be provided as an optical transmission or a radio transmission. For the transmission, the control signals may be transmitted as infrared radiation or as radio transmission or Bluetooth or the like.

Preferably, the sensor probe is a contact probe (i.e. indirect or direct contact probe) where the sensor element is configured to be positioned in contact with the food to be processed (i.e. direct contact probe) or in contact with the vessel or container holding the food to be processed and the food processing parameter is sensed through or via the contact surface between the food surface or the container surface and the sensor element (i.e. indirect contact).

Alternatively, the sensor probe is a contactless sensor configured to detect the temperature on the surface or interior of the food to be processed or the medium in which the food is processed. Preferably the contactless sensor is a pyrometer.

The container or vessel may be a pan or pot or may be a cavity of an oven. In case the container is an oven, the sensor probe may be positioned within the oven in contact with the food or in contact with a container placed within the oven. Alternatively, the sensor probe may be positioned at the outside of the oven, e.g. at a door of the oven and the food processing parameter is sensed through the door of the oven.

Preferably the sensor element is a temperature sensor for detecting the food temperature (e.g. the temperature of the food within a container, such as water or oil temperature in which the food is processed). Preferably the food temperature is detected through a pot or pan wall.

Preferably, the sensor probe comprises a magnetic element adapted to magnetically secure the sensor probe on the wall of a container holding the food to be processed and having a wall section being attracted by the magnetic element, and/or on a wall section of a docking base having a wall section being attracted by the magnetic element.

The magnetic element may be arranged within the stepped connection portion, and more preferably at an end portion of the stepped connection portion which is connected to the sensor element.

Further, a docking arrangement is provided that comprises a sensor probe as disclosed herein, and a docking base configured for storing and/or charging the sensor probe when the sensor probe is positioned on the docking base.

The sensor probe may comprise the magnetic element adapted to magnetically secure the sensor probe on the docking base and/or the docking base may comprise a magnetic element adapted to magnetically secure the sensor probe on the docking base.

Alternatively or additionally, the sensor probe and the docking base each has an inductive charging modules configured to charge a battery of the sensor probe when the sensor probe is positioned on or at the docking base, or the sensor probe and the docking base each have electrically conductive contact elements configured to conduct current for charging a battery of the sensor probe when the sensor probe is positioned in a position on the docking base where the contact elements mate with each other. The contact elements at the sensor probe or at the docking base may be pins, in particular pogo pins.

The docking arrangement may be provided in a configuration in which the sensor probe is only securely 'stored' on the docking base. The docking arrangement may comprise a docking base cover for covering the docking base and the sensor probe stored on the docking base.

The magnetic securing of the sensor probe on the docking base may be provided by a magnetic element on each of the sensor probe and the docking base, wherein the magnets of the sensor probe and the docking base are paired to attract each other, or by either the sensor probe or the docking base having a magnetic element and the other part has a surface section being magnetically attracted by the magnetic element at a paired position. Thus the sensor probe is mechanically secured on the docking base if placed on the docking base.

Preferably, the docking base has fasteners for attachment to a wall, wherein the magnetic securing is configured such that the sensor probe can be stored on the docking base when the docking base is attached to the wall.

Preferably, the docking base comprises a charging control unit configured to provide power for charging the battery of the sensor probe when the sensor probe is positioned in a position on the docking base where the contact elements mate with each other. The docking base may provide current to the battery of the sensor probe for example via USB-C.

Further, a food processing arrangement is provided that comprises a food processing device having a device controller, and a sensor probe as disclosed herein. The sensor probe comprises a or the transmission module configured to transmit control signals, and the device controller of the food processing device comprises a receiver module configured to receive the control signals from the sensor probe.

Preferably, the device controller is configured to control the operation of the food processing device at least partially dependent on the control signals received from the sensor probe and in particular from the transmission module of the sensor probe.

Preferably, the food processing device is an oven, a cooktop, a refrigerator, a freezer, a smoker, a steamer, or a grill.

Preferably, dependent on the control signal received from the sensor probe, the device controller is configured to:
- change a food processing mode,
- stop and/or activate heating in case the food processing device is an oven and/or cooktop,
- stop and/or activate chilling and/or freezing in case the food processing device is a freezer and/or refrigerator,
- activate an optical and/or acoustic alarm,
- activate indicator indicating an operation or abnormal state to user,
- continue a current food processing mode when the control signal indicates a movement by user, in particular indicates a repositioning of the processed food by the user,
- change a heat supplied to the food when the control signal indicates a boiling of water or liquids. In this case, the device controller may be configured to reduce temperature supplied to the food so that spilling and/or burning of the food is prevented.

In particular, the heating by the food processing device (e.g. an oven and/or a heating zone of a cooktop) is reduced if boiling of water or liquid is detected and the food should only be processed below the boiling temperature. For example when keeping sausages in a warm state.

Preferably, the food processing device is an induction heater and the movement analysis module is configured to supply an intermediate signal indicating the presence or absence of a periodic movement signal to the control unit and the control unit is configured to transmit a control signal to the device controller indicating the induction heating signal being present or absent and/or indicating the strength of the induction heating.

The device controller may be configured to deactivate the induction heating if no induction heating is indicated by the control signal and/or to adapt the induction heating power dependent on the strength of the induction heating indicated by the control signal.

Each individual feature of the sensor probe can be combined with the docking arrangement and/or the food processing arrangement, or any sub-group of features (e.g. any of the dependent claims) of the sensor probe can be individually combined with the docking arrangement and/or the food processing arrangement. Vice versa any individual feature or sub-group of features (e.g. any of the dependent claims) of the docking arrangement and/or the food processing arrangement can be combined with the sensor probe.

Any feature disclosed herein (for the above embodiments and/or configurations and from the below described detailed embodiments and modifications) can be combined with the claimed subject individually or in any sub-combination. If herein the conjunction "and/or" is used all logical elements and combinations are individually disclosed. E.g. a, b and/or c discloses the elements/combinations a, b, c, ab, ac, be as well as abc.

Reference is made in detail to preferred embodiments of the invention, examples of which are illustrated in the accompanying figures, which show:
- Fig. 1: a perspective view of a sensor probe,
- Fig. 2: another perspective view of the sensor probe in Fig. 1,
- Fig. 3: a perspective exploded view of the sensor probe in Fig. 1,
- Fig. 4: a schematic side view of a container and a sensor probe,
- Fig. 5: a schematic side view of a container and another sensor probe,
- Fig. 6: a schematic side view of a container and another sensor probe,
- Fig. 7: a schematic side view of a cooktop with a pot and a sensor probe,
- Fig. 8: a side view of a docking arrangement with a docking base and the sensor probe in Fig. 1,
- Fig. 9: a schematic block diagram illustrating a food processing arrangement comprising the sensor probe in Fig. 1 and a food processing device and/or a mobile device.

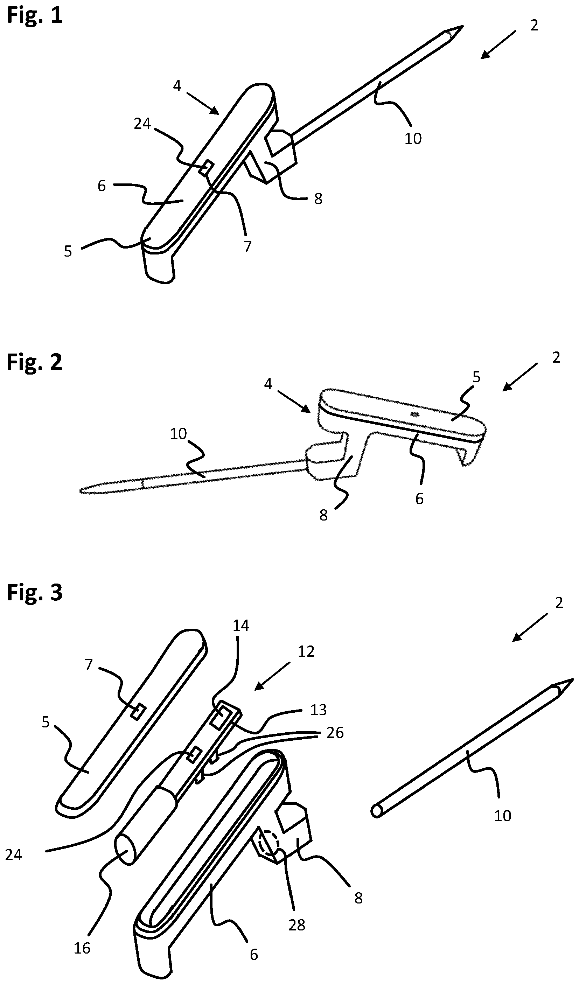

Fig. 1 is a perspective view of a sensor probe 2 for measuring a food processing parameter such as a food temperature, Fig. 2 is another perspective view of the sensor probe 2 in Fig. 1 and Fig. 3 is an exploded view of the sensor probe 2 in Fig. 1.

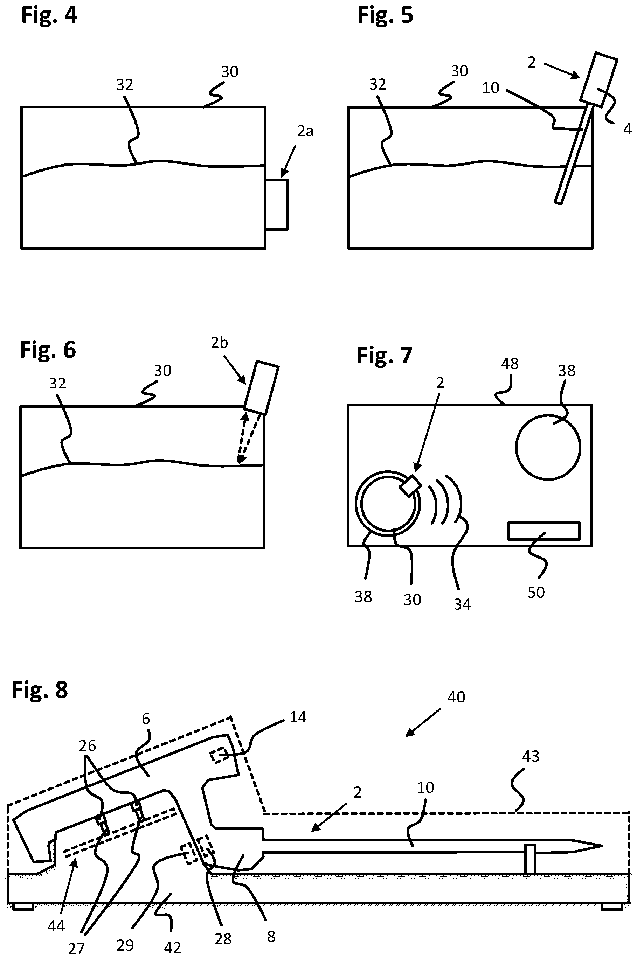

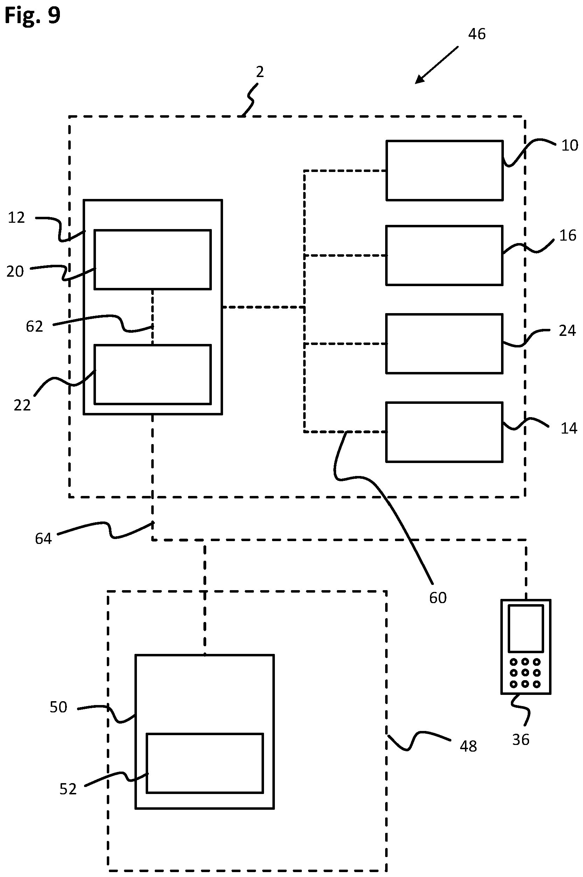

The sensor probe 2 comprises a housing 4, and a sensor element 10 arranged at the housing 4 or extending from the housing 4 and being configured to detect a food parameter such as the food temperature. As shown in Fig. 3, the sensor probe 6 further comprises a control unit 12 configured to receive a sensor signal from the sensor element 10, and a movement sensor 14 configured to detect a movement and/or position of the sensor probe 2. The control unit 12 is further configured to receive and process a movement signal 60 from the movement sensor 14 and/or a food processing parameter signal from the sensor element 10. Preferably, the control unit 12 is configured to change/adapt or control functions or operation of the sensor probe 2 and/or to change/adapt or control functions or operation of an external device such as a food processing device 48 (e.g. a cooktop as shown in Fig. 7) or a mobile device 36 (see Fig. 9). For the purposes and according to the understanding herein, a 'food processing parameter' is not a vibration or movement of the food to be processed as such. I.e. a food processing parameter is not a movement sensor signal.

The sensor element 10 may be formed as an elongate element having a pointed tip. This facilitates insertion of the sensor element 10 into a food piece. The sensor probe 2 may have an overall length between 10 and 30 cm, preferably between 17 and 25 cm.

The housing 4 may comprise a handle portion 6 configured for holding the sensor probe 2, and a connecting portion 8 connecting the handle portion 6 and the sensor element 10. As shown in Figs. 1 and 2, the connecting portion 8 may be designed as a stepped connecting portion such that at least a portion of the handle portion 6 is offset with respect to the sensor element 10.

The handle portion 6 and the sensor element 10 may be arranged at an angle to each other. For example, the handle portion 6 and the sensor element 10 enclose between them an angle of 20 to 50°. However, in another implementation, the handle portion 6 may be arranged parallel to the longitudinal axis of the sensor element 10.

The movement sensor 14 comprises or is an accelerometer configured to sense an acceleration in one, two or three spatial directions, wherein preferably the accelerometer is a gyroscopic sensor and/or a micro-electro-mechanical system (MEMS) device.

As shown in Fig. 3, the movement sensor 14 and the control unit 12 are arranged within the housing 4 and in particular within the handle portion 6 of the housing 4. The housing 4 may be covered, preferably watertight, by a cover 5. The control unit 12 may comprise a circuit board 13 arranged within the housing 4 and in particular within the handle portion 6, wherein the movement sensor 14 and the sensor element 10 are electrically coupled to the circuit board 13. The sensor probe 2 may further comprise a, preferably rechargeable, battery 16 for supplying electrical power to the sensor probe 2. The battery 16 is preferably electrically coupled to the circuit board 13. Preferably, the battery 16 is arranged within the housing 4 and in particular within the handle portion 6.

The sensor probe 2 may further comprise charging contact elements 26 configured to conduct current for charging the battery 16 of the sensor probe 2, in particular, when the sensor probe 2 is positioned in a position on a docking base 42 where the charging contact elements 26 mate with charging contact elements 26 of the docking base 42 (see Fig. 8). The housing 4 may comprise recesses (not shown) through which the charging contact elements 26 may extend from an inner cavity of the housing 4 to an outside of the housing 4. Preferably, the charging contact elements 26 are electrically coupled to the circuit board 13 and extend from the circuit board 13 arranged within the housing 4 to an outside of the housing 4.

As shown in Fig. 3, the sensor probe 2 may comprise an indicator 24 such as a LED indicating an operation mode of the sensor probe 2 as a feedback for the user. Preferably, the cover 5 comprises an opening 7 or a transparent area through which the light of the indicator can shine or illuminate when the cover 5 is attached to the housing 4 (cf. Fig. 1).

The control unit 12 may comprise a movement analysis module 20 (see Fig. 9) configured to process the movement signal 60 detected by the movement sensor 14 to determine that the movement signal 60 is indicative for one or more of the following:
a) that the movement event is a tipping signal indicating a tipping of the sensor probe 2,
b) that the movement event is shock-free movement,
c) that the movement includes a shock vibration and/or exceeds a predefined threshold of acceleration,
d)that the movement is an ongoing and/or a regular movement,
e) that the movement is a predefined movement pattern, for example indicating a shaking of the sensor probe 2, and the control unit 12 is configured to activate a setting mode when the predefined movement pattern is detected,
f) that the movement is a noisy and/or stochastic pattern.

Point a): The movement sensor 14 arranged within the housing 4 can detect tipping with the finger like a key function.

In particular, the control unit 12 may be configured to detect the numbers of the tipping and/or the repetition frequency of the tipping and in dependency thereof the control unit 12 is configured: to activate or deactivate the food processing parameter measuring mode and/or control a signal transmission mode, and/or to enter a setting mode of the control unit 12 in which the control unit 12 is configured for receiving setting signals. For example, when tipping the sensor probe 2 one time, the operation of the control unit 12 changes from a standby mode to an active mode and/or the indicator 24 of the sensor probe 2, may be activated. For example, when tipping the sensor probe 2 two times, the operation of the control unit 12 changes from an active mode to a standby mode or off mode and/or the indicator 24 of the sensor probe 2 may be deactivated.

Point b): For example, during the cooking process the sensor probe 2 need to be removed e.g. turning the steak or stirring the food and put back. With the movement sensor 14, the control unit 12 and in particular the movement analysis module 20 can detect that the movement of the sensor probe 2 is a shock-free movement. The temperature curve is ignored and a message may be sent to put back the sensor probe 2 into the food. If the sensor probe 2 is not put back, the user may be informed to place the sensor probe 2 back into the container 30 or pot or the program will be stopped. With the movement sensor 14 an interaction between the cooking program and the user is possible. In particular, next steps of the cooking program can be activated based on the determined shock-free movement or the user can be reminded to do a next step in the cooking program. The movement sensor 14 can track if a specific step in the cooking program is done.

Point c): For example, the sensor probe 2 is located on a rim of a pot that defines the position of the sensor probe 2. During the cooking process it could happen that the sensor probe 2 falls out of the pot and a risk of overheating the food or burning fat can happen or the food can spill over. The movement sensor 14 can detect the position and/or movement of the sensor probe 2 and the movement analysis module 20 can determined based on the movement signal that the movement is a shock vibration and/or exceeds a predefined threshold of acceleration which indicates a dropping or falling of the sensor probe 2. The control unit 12 can transmit a control signal to the food processing device 48 to pause the cooking process and/or reduce the heating power of the heating process and/or sending an alarm. The user can immediately react and can put the sensor probe 2 back into the original position.

The control unit 12 if connected to WIFI or a cloud may inform the user via an app by a push notice that the sensor probe 2 has fallen out.

Point f): A noisy pattern determined by the movement analysis module 20 can be indicative that a liquid for processing the food or liquid food (such as a stew or soup) is boiling and/or that bubbles are forming in the liquid or liquid food (e.g. there is the risk of overflow when bubbles form or the tomato soup is bubbling and spilling over). Thus, the control unit 12 can control the food processing device 48 to reduce the heating power such that the liquid for processing the food or the liquid food is processed below the boiling temperature. This can for example be advantageous when the food should only be kept in a warm state.

The movement and/or position signal from the movement sensor 14 can be processed by the movement analysis module 20. In particular, the movement analysis module 20 may be configured to differentiate between a tip signal, shaking, vibrations of boiling noise, or when the sensor probe 2 is dropping down.

As shown in the Figures, the sensor probe 2 is preferably implemented without any buttons and the control of the sensor probe 2 is only achieved by detecting and processing the movement signal 60 from the movement sensor 14. The sensor probe 2 can also be operated with wet fingers, as the sensor probe 2 is controlled by detecting the movement of the movement sensor and not by pressing or touching buttons or resistance sensitive areas. Thus, the sensor probe 2 can be operated easily and reliably.

Further, due to the elimination of physical switches (buttons) or electronic contact switches, the need for difficult seals against water and steam in a rough or hot or humid environment in which the sensor probe 2 or its sensor element 10 is used and which can create mal function due to unintended switch or steam is overcome.

The movement signal 60 of the movement sensor 14 can be used to detect actions. Preferably, the movement analysis module determines that the sensor is moved by the user and the sensor probe 2 is automatically activated. With shaking, tipping, or of the turning of the sensor probe 2 defined functions can be activated. Functions can be for example Turn-on, turn off, increase temperature or decrease it, core temperature measurement or liquid measurements.

Fig. 9 shows an exemplary block diagram of a food processing arrangement 46 comprising the sensor probe 2, the food processing device 48 such as a cooktop or an oven. As shown in Fig. 9, the control unit 12 is connected to the sensor element 10, the movement sensor 14, and if present to the battery 16 and/or the indicator 24. The movement sensor 14 detects the movement signal 60, when the sensor probe 2 is moved, and transmits the movement signal 60 to the control unit 12. The movement analysis module 20 may be configured to receive the movement signal 60 and to generate an intermediate signal 62 which is supplied to a controller of the control unit 12. The control unit 12 may be configured to control an operation mode of the sensor probe 2 in dependency of the intermediate signal 62.

Alternatively or additionally, the control unit 12 may comprise a transmission module 22 configured to transmit control signals 64 to a receiver module 52 of the food processing device 48 and/or to the mobile device 36 communicating with the sensor probe 2, wherein in particular the control signals 64 are indicative for the food processing parameter and/or for the movement signal 60 generated by the movement sensor 14 and/or for a status signal indicative for the movement type.

In particular, the transmission module 22 of the control unit 12 is configured to transmit control signals 64 to the receiver module 52 of the food processing device 48 and/or to the mobile device 36 (see Fig. 9) in dependency of the intermediate signal 62. The food processing device 48 may comprise a device controller 50 which is configured to control the operation of the food processing device 48 at least partially dependent on the control signals 64 received from the sensor probe 2 via the receiver module 52. For example, dependent on the control signal 64 received from the sensor probe 2 the device controller 50 is configured to:
- change a food processing mode,
- stop and/or activate heating in case the food processing device 48 is an oven and/or cooktop,
- activate an optical and/or acoustic alarm,
- activate indicator indicating an operation or abnormal state to user,
- continue a current food processing mode when the control signal 64 indicates a movement by a user, in particular indicates a repositioning of the processed food by the user, and/or
- change a heat supplied to the food when the control signal 64 indicates a boiling of water or liquids.

As shown in Fig. 7, the food processing device 48 may be an induction heater and the movement analysis module 20 may be configured to supply an intermediate signal 62 indicating the presence or absence of a periodic movement signal to the control unit 12 and the control unit 12 is configured to transmit a control signal 64 to the device controller 50 of the food processing device 48 indicating the induction heating signal being present or absent and/or indicating the strength of the induction heating. The device controller 50 may be configured to deactivate the induction heating if no induction heating is indicated by the control signal 64 and/or to adapt the induction heating power dependent on the strength of the induction heating indicated by the control signal 64.

Figs. 4 to 7 schematically shows different implementations of the sensor probe 2.

Fig. 4 shows a container 30 (e.g. cookware such as a pot or pan or an oven cavity), wherein a sensor probe 2a is attached to an outer surface of the container 30, wherein the sensor element (not shown) is configured to be positioned in contact with the container 30 holding the food to be processed and the food processing parameter such as the temperature is sensed through or via the contact between the surface of the container 30 and the sensor element. Preferably, the sensor probe 2a comprises a magnetic element (cf. magnetic element 28 in Fig. 8) adapted to magnetically secure the sensor probe 2a on the outer wall of the container 30.

Fig. 5 shows the sensor probe 2 as illustrated in Figs. 1 to 3, 5 and 8, wherein the sensor probe 2 is positioned at a rim of the container 30, and the sensor element 10 is positioned in contact with the food to be processed and the food processing parameter such as the food temperature is sensed through or via the contact surface between the food surface and the sensor element 10.

Fig. 6 shows a sensor probe 2b which is arranged at the container 30, in particular at a rim of the container 30, wherein the sensor probe 2b is a contactless sensor configured to detect the temperature on the surface or interior of the food 32 to be processed or the medium in which the food is processed. For example, the sensor probe 2b is a pyrometer.

Fig. 7 shows a schematic side view of a food processing device 48 being a cooktop with a pot 30 which is placed on a heating zone 38 of the cooktop 48, wherein the sensor probe 2 shown in Figs. 1 to 3, 5 and 8 is arranged at the pot 30.

If for example the cooktop 48 is an induction apparatus configured to apply induction radiation to the pot 30 in which the food is contained, during induction heating a periodic vibration (sound) signal 34 is induced to the pot 30 as a side effect. The presence or absence of said periodic vibration signal 34 (caused by the induction radiation) can be detected with the movement sensor 14 of the sensor probe 2. Based on the movement signal it can be determined whether the food to which the sensor probe 2 is assigned is actually heated or not. Incorrect food processing can be detected thereby. E.g. it can be detected if the pot 30 is positioned at the wrong heating zone 38 or if the pot is not convenient for induction heating or if there is a failure in the induction heating. A control signal 64 may be transmitted to the

The cooktop 48 comprises the device controller 50 configured to receive the control signals from the control unit 12 of the sensor probe 2. For example, the device controller 50 is configured to deactivate the induction heating if no induction heating is indicated by the control signal 64 and/or to adapt the induction heating power dependent on the strength of the induction heating indicated by the control signal 64. The detection of the periodic signal is much faster than detecting a temperature change of the processed food. Thus, operation control whether e.g. the food to be processed is placed on or in the correct processing zone is much faster than a verification using a temperature change.

It is clear to the skilled person that, unless it is explicitly indicated otherwise, all features disclosed herein regarding the sensor probe 2 are also applicable to the sensor probes 2a and 2b. In particular, the sensor probes 2a or 2b can also be used for sensing the vibrations of the induction apparatus shown in Fig. 7.

Fig. 8 shows a side view of a docking arrangement 40 comprising the sensor probe 2 of Fig. 1 and a docking base 42 configured for storing and/or charging the sensor probe 2 when the sensor probe 2 is positioned on the docking base 42. The sensor probe 2 may comprise a magnetic element 28 adapted to magnetically secure the sensor probe 2 on the docking base 42 and/or the docking base 42 comprises a magnetic element 29 adapted to magnetically secure the sensor probe 2 on the docking base 42. As shown in Fig. 8, the sensor probe 2 may comprise both magnetic elements 28, 29, wherein the magnetic elements 28, 29 of the sensor probe 2 and the docking base 42 are paired to attract each other. The magnetic element 28 may also be used for attachment to a wall of a container 30 (cf. Fig. 4) holding the food to be processed and having a wall section being attracted by the magnetic element 28.

As shown in Fig. 8, the sensor probe 2 and the docking base 42 each may have electrically conductive contact elements 26, 27 configured to conduct current for charging the battery 16 of the sensor probe 2 when the sensor probe is positioned in a position on the docking base 42 where the contact elements 26, 27 mate with each other. In particular, the docking base 42 may comprise a charging control unit 44 which is configured to provide electrical power to the contact elements 27 for charging the battery 16 of the sensor probe 2 via the contact elements 26 of the sensor probe. One of the contact elements 26, 27 (preferably the ones on the docking base 42) may be pins, in particular pogo pins. Alternatively to the conductive contact elements 26, 27, the sensor probe 2 and the docking base 42 each has an inductive charging module (not shown) configured to charge the battery 16 of the sensor probe 2 when the sensor probe 2 is positioned on or at the docking base 42.

The docking arrangement 40 may comprise a docking base cover 43 configured for covering the docking base 42 and the sensor probe 2 stored within the docking base 42.

### Reference Numeral List

- 2, 2a, 2b: sensor probe
- 4: housing
- 5: cover
- 6: handle portion
- 7: opening
- 8: connecting portion
- 10: sensor element
- 12: control unit
- 13: circuit board
- 14: movement sensor (e.g. accelerometer)
- 16: battery
- 20: movement analysis module
- 22: transmission module
- 24: indicator (e.g. LED)
- 26, 27: charging contact element
- 28, 29: magnetic element
- 30: container (e.g. cookware or oven cavity)
- 32: food / liquid
- 34: vibration wave / signal (acceleration signal)
- 36: mobile device
- 38: heating zone
- 40: docking arrangement
- 42: docking base
- 43: docking base cover
- 44: charging control unit
- 46: food processing arrangement
- 48: food processing device (e.g. cooktop and/or oven)
- 50: device controller
- 52: receiver module
- 60: movement signal
- 62: intermediate signal
- 64: control signal

## Claims

1. Sensor probe (2, 2a, 2b) for measuring a food processing parameter, comprising:
a housing (4, 5),
a sensor element (10) arranged at the housing (4, 5) or extending from the housing (4, 5) and being configured to detect a food parameter,
a control unit (12) configured to receive a sensor signal from the sensor element (10), and
a movement sensor (14) configured to detect a movement and/or a position of the sensor probe (2),
wherein the control unit (12) is further configured to receive and process a movement signal (60) from the movement sensor (14).

2. Sensor probe according to claim 1, wherein the movement sensor (14) comprises an accelerometer configured to sense an acceleration in one, two or three spatial directions, wherein preferably the accelerometer is a gyroscopic sensor and/or a micro-electro-mechanical system (MEMS) device.

3. Sensor probe according to claim 1 or 2, wherein the control unit (12) comprises a movement analysis module (20) configured to process or preprocess the movement signal (60) to change or adapt or control functions of the sensor probe and/or of an external receiver, wherein in particular the movement analysis module (20) is configured to determine based on the movement signal (60) that the movement signal (60) is indicative for one or more of the following:
- that the movement event is a tipping signal indicating a tipping of the sensor probe (2, 2a, 2b),
- that the movement event is shock-free movement of the sensor probe,
- that the movement includes a shock vibration and/or exceeds a predefined threshold of acceleration,
- that the movement is an ongoing and/or a regular movement,
- that the movement is a predefined movement pattern, for example indicating a shaking of the sensor probe (2), and the control unit (12) is configured to activate a setting mode when the predefined movement pattern is detected,
- that the movement is a noisy and/or stochastic pattern.

4. Sensor probe according to claim 3, wherein the control unit (12), in particular the movement analysis module (20), is configured to detect the numbers of the tipping and/or the repetition frequency of the tipping and in dependency thereof the control unit (12) is configured:
- to activate or deactivate the food processing parameter measuring mode and/or control a signal transmission mode, and/or
- to enter a setting mode of the control unit (12) in which the control unit (12) is configured for receiving setting signals.

5. Sensor probe according to claim 3 or 4, wherein the ongoing and/or regular movement is a periodic signal or comprises components of a periodic signal indicating that food processing is in progress, and optionally the movement analysis module (20) is configured to detect the strength of the periodic movement signal.

6. Sensor probe according to any of the preceding claims, wherein the control unit (12) comprises a or the movement analysis module (20), wherein the movement analysis module (20) is configured to:
- analyze a temporal sequence of the movement signal (60) generated by the movement sensor (14) and to determine a type of movement dependent on the temporal sequence, and/or
- apply a signal pattern analysis to the movement signal (60) generated by the movement sensor (14) to determine a type of movement, and/or
- compare the movement signal (60) generated by the movement sensor (14) to a signal threshold, and/or
- detect a periodic signal in the movement signal (60).

7. Sensor probe according to any of claims 4 to 6, wherein the movement analysis module (20) is configured to generate an intermediate signal (62) which is supplied to the control unit (12), and
wherein the control unit (12) is configured to control an operation mode of the sensor probe (2) in dependency of the intermediate signal (62), and/or
wherein the control unit (12) is configured to transmit control signals (64) to an or the external receiver (52) in dependency of the intermediate signal (62).

8. Sensor probe according to any of the preceding claims, wherein the control unit (12) comprises a transmission module (22) configured to transmit control signals (64) to an or the external receiver (52), wherein in particular the control signals (64) are indicative for the food processing parameter and/or for the movement signal (60) generated by the movement sensor (14) and/or for a status signal indicative for the movement type.

9. Sensor probe according to any of the preceding claims,
wherein the sensor probe (2) is a contact probe, wherein the sensor element (10) is configured to be positioned in contact with the food to be processed or in contact with a container (30) holding the food to be processed and the food processing parameter is sensed through or via the contact surface between the food surface (32) or the surface of the container (30) and the sensor element (10), and/or
wherein the sensor probe (2) is a contactless sensor configured to detect the temperature on the surface (32) or interior of the food to be processed or the medium in which the food is processed.

10. Sensor probe according to any of the preceding claims, wherein the sensor probe (2) comprises a magnetic element (28) adapted to magnetically secure the sensor probe (2)
on the wall of a container (30) holding the food to be processed and having a wall section being attracted by the magnetic element (28), and/or
on a wall section of a docking base (42) having a wall section being attracted by the magnetic element (28).

11. Docking arrangement (40) comprising
a sensor probe (2, 2a, 2b) according to any of the preceding claims, and
a docking base (42) configured for storing and/or charging the sensor probe (2, 2a, 2b) when the sensor probe is positioned on the docking base (42),
wherein the sensor probe (2, 2a, 2b) comprises a or the magnetic element (28) adapted to magnetically secure the sensor probe on the docking base (42) and/or the docking base (42) comprises a magnetic element (29) adapted to magnetically secure the sensor probe (2) on the docking base (42), and/or
wherein the sensor probe (2, 2a, 2b) and the docking base (42) each has an inductive charging module configured to charge a battery (16) of the sensor probe when the sensor probe is positioned on or at the docking base (42), or
the sensor probe (2, 2a, 2b) and the docking base (42) each have electrically conductive contact elements (26, 27) configured to conduct current for charging a or the battery (16) of the sensor probe when the sensor probe is positioned in a position on the docking base (42) where the contact elements (26, 27) mate with each other.

12. Food processing arrangement (46) comprising:
a food processing device (48) having a device controller (50), and
a sensor probe (2, 2a, 2b) according to any of the preceding claims,
wherein the sensor probe comprises a or the transmission module (22) configured to transmit control signals (64), and
wherein the device controller (50) of the food processing device comprises a receiver module (52) configured to receive the control signals (64) from the sensor probe.

13. Food processing arrangement according to claim 12, wherein the device controller (50) is configured to control the operation of the food processing device (48) at least partially dependent on the control signals (64) received from the sensor probe (2, 2a, 2b).

14. Food processing arrangement according to claim 12 or 13, wherein the food processing device (48) is one of the following: an oven, cooktop, a refrigerator, a freezer, smoker, steamer, grill.

15. Food processing arrangement according to claim 12, 13 or 14, wherein dependent on the control signal (64) received from the sensor probe (2, 2a, 2b) the device controller (50) is configured to:
- change a food processing mode,
- stop and/or activate heating in case the food processing device (48) is an oven and/or cooktop,
- stop and/or activate chilling and/or freezing in case the food processing device (48) is a freezer and/or refrigerator,
- activate an optical and/or acoustic alarm,
- activate an indicator indicating an operation or abnormal state to user,
- continue a current food processing mode when the control signal (64) indicates a movement by a user, in particular indicates a repositioning of the processed food by the user, and/or
- change a heat supplied to the food when the control signal (64) indicates a boiling of water or liquids.

16. Food processing arrangement according to any of claims 12 to 15, wherein the food processing device (48) is an induction heater and a or the movement analysis module (20) is configured to supply an intermediate signal (62) indicating the presence or absence of a periodic movement signal to the control unit (12) and the control unit (12) is configured to transmit a control signal (64) to the device controller (50) of the food processing device (48) indicating the induction heating signal being present or absent and/or indicating the strength of the induction heating.
